# EUROPÄISCHE PATENTSCHRIFT

(11) **EP 3 463 940 B1**
(45) Veröffentlichungstag und Bekanntmachung des Hinweises auf die Patenterteilung: **20.04.2022**
(21) Anmeldenummer: 17725249.1
(22) Anmeldetag: 23.05.2017
(51) Int. Cl.: B60G 17/08, B60G 17/016, B60G 17/018, B60C 23/00

(54) **VERFAHREN UND KRAFTFAHRZEUG MIT EINER STEUERVORRICHTUNG ZUM STEUERN ZUMINDEST EINES SCHWINGUNGSDÄMPFERS DES KRAFTFAHRZEUGS**
METHOD AND MOTOR VEHICLE COMPRISING A CONTROL DEVICE FOR CONTROLLING AT LEAST ONE VIBRATION DAMPER OF THE MOTOR VEHICLE
PROCÉDÉ ET VÉHICULE AUTOMOBILE COMPRENANT UN DISPOSITIF DE COMMANDE POUR COMMANDER AU MOINS UN AMORTISSEUR DE VIBRATIONS DU VÉHICULE AUTOMOBILE

(30) Priorität: 06.06.2016 DE 102016209929
(43) Veröffentlichungstag der Anmeldung: 10.04.2019
(73) Patentinhaber: Volkswagen Aktiengesellschaft, 38440 Wolfsburg (DE)
(72) Erfinder: DE BEER, Frank, 38446 Wolfsburg (DE); BÄRECKE, Frank, 38444 Wolfsburg (DE); KUKLA, Stefan, 29339 Wathlingen (DE); PÜTZSCHLER, Jürgen, 29413 Diesdorf (DE)
(86) Internationale Anmeldenummer: PCT/EP2017/062388
(87) Internationale Veröffentlichungsnummer: WO 2017/211583

(56) Entgegenhaltungen:
- EP-A1- 0 783 983
- EP-A1- 2 955 078
- EP-A2- 1 536 957
- EP-B1- 1 646 516
- WO-A1-90/05646
- WO-A2-2008/092003
- DE-A1- 4 112 738
- DE-A1- 4 126 078
- DE-A1- 10 010 306
- DE-A1- 10 120 918
- DE-A1-102005 014 237
- DE-A1-102009 041 566
- DE-A1-102014 217 307
- JP-A- H0 747 829
- JP-A- 2000 079 812
- JP-A- 2000 318 416

## Beschreibung

Die Erfindung betrifft ein Verfahren zum Betreiben einer Steuervorrichtung für ein Fahrwerk eines Kraftfahrzeugs. Mittels der Steuervorrichtung wird ein Stellsignal zum Einstellen einer Dämpferhärte zumindest eines Schwingungsdämpfers des Fahrwerks erzeugt. Zu der Erfindung gehört auch ein Kraftfahrzeug mit einer Steuervorrichtung zum Steuern des zumindest einen Schwingungsdämpfers.

In einem sogenannten semi-aktiven Fahrwerk kann eine Steuervorrichtung in Abhängigkeit von einer aktuellen und/oder geplanten (zukünftigen) fahrdynamischen Situation eine jeweilige Dämpferhärte zumindest eines Schwingungsdämpfers des Fahrwerks des Kraftfahrzeugs einstellen, um hierdurch zum Beispiel eine Wankbewegung des Kraftfahrzeugs in einer Kurvenfahrt zu verringern. Eine solche Steuerung der Dämpferhärte ist oftmals auf Sommerreifen abgestimmt und für diese entwickelt, da es aufgrund der oftmals guten Straßenverhältnisse im Sommer zu den extremsten Fahrsituationen kommt, in welchen das Stellen der Dämpferhärte besonders vorteilhaft oder wirksam ist. Beim Verbau von Winterreifen oder Ganzjahresreifen kommt es dann entsprechend im Bereich der Querdynamik zu Performanceverlusten.

Aus der EP 1 646 516 B1 ist ein Verfahren zum Erkennen eines Reifentyps bekannt. Zu jedem Reifentyp wird ein Kennfeld mit charakteristischen Reifeneigenschaften gespeichert und während eines Fahrbetriebs des Kraftfahrzeugs die Eigenschaften eines aktuell verbauten Reifens gemessen. Durch einen Vergleich der gemessenen Reifeneigenschaften mit den Kennfeldern kann der aktuelle verbaute Reifentyp ermittelt werden. Anschließend kann ein Fahrzeugsystem über den verbauten Reifentyp informiert werden. Nachteilig bei diesem Verfahren ist, dass für eine Vielzahl unterschiedlicher Reifen jeweils ein Kennfeld benötigt wird und anhand von Messwerten dann eines der Kennfelder ausgewählt werden muss, was aufgrund zu Messungenauigkeiten zu Fehleinschätzungen führen kann.

Aus der DE 10 2009 041 566 A 1 ist ein Verfahren zum Ermitteln eines Fahrbahnreibwerts bekannt, wobei mögliche Fahrbahnreibwerte in Reibwertklassen eingeteilt sind. Mittels einer Reifentyperkennung wird hierbei auch der beim Durchführen des Verfahrens verwendete Reifen des Kraftfahrzeugs berücksichtigt.

In dem Dokument WO 2008/092003 A2 ist ein Kraftfahrzeug beschrieben, in welchem mittels eines Antiblockiersystems, ABS, die Oberflächenbeschaffenheit einer Straße in Bezug auf die Längs- und Querbeschleunigung erfasst wird und während eines Bremsmanövers zusätzlich mittels eines aktiven Dämpfersystems die Dämpferhärte nachgestellt wird.

Das Dokument DE 41 12 738 A1 beschreibt ein System zum Feststellen von Eigenschaften von Fahrzeugreifen, indem aus dem Fahrzeugreifen ein Datenspeicher ausgelesen wird, in welchem die Eigenschaften angegeben sind. Die Daten können dann beispielsweise einer Dämpferregelung bereitgestellt werden.

Das Dokument DE 10 2009 041 566 A1 beschreibt, dass ein Fahrbahnreibwert nach Reibklassen klassifiziert und hierbei auch ein aktuell verwendeter Reifentyp, beispielsweise Sommer- und Winterreifen, berücksichtigt werden kann.

Das Dokument EP 2 955 078 A1 beschreibt ein System, mittels welchem während einer Fahrt automatisiert ein aktuell verwendeter Reifentyp ermittelt werden kann, indem Sensordaten ausgewertet und nach Reifenklassen klassifiziert werden. Als Sensor kann ein Querbeschleunigungssensor verwendet werden.

Das Dokument EP 1 646 516 B1 beschreibt ein Verfahren zum automatisierten Ermitteln einer Reifeneigenschaft auf der Grundlage eines Frequenzspektrums, das am Reifen gemessen wird. Die ermittelte Eigenschaft kann an ein Stabilitätsprogramm weitergeleitet werden.

In dem Dokument DE 10 2005 014 237 A1 ist beschrieben, dass eine Dämpferhärte durch Stellen von Ventilen verändert werden kann und dass dieses Stellen der Ventile geschwindigkeitsabhängig erfolgen kann, indem unterhalb einer Grenzgeschwindigkeit eine andere Ventilstellung gewählt wird als oberhalb dieser Grenzgeschwindigkeit. Die Grenzgeschwindigkeit wiederum wird von einem Straßenzustandskoeffizienten Kᵢ bestimmt, der wiederum aus einer Straßenzustandsgröße µᵢ berechnet wird, wobei diese Straßenzustandsgröße µᵢ mittels Tiefpassfilterung aus Messwerten der vertikalen Beschleunigung gebildet wird.

Das Dokument DE 101 20 918 A1 beschreibt, dass die Dämpferhärte während eines Fahrmanövers graduell angepasst werden kann, wenn "Handlungsbedarf" erkannt wird, was wiederum bedeutet, dass mittels Sensoren erkannt wird, dass beispielsweise eine Fahrzeug-Querbeschleunigung in einen kritischen Bereich gerät.

In dem Dokument DE 100 10 306 A1 ist beschrieben, dass beim Berechnen eines Kraftschlusspotenzials ein Reifentyp einbezogen werden kann.

Aus der DE 41 26 078 A1 ist ein Verfahren zum Einstellen einer Dämpferhärtegrads in einem Fahrwerk eines Kraftfahrzeugs mit den Merkmalen der Oberbegriffe der Ansprüche 1 und 11 bekannt, bei welchem während der Fahrt auftretende Wankbewegungen durch Auswerten der Fahrzeuggeschwindigkeit und des Lenkwinkels erkannt werden, so dass die Wankbewegungen früher erkannt und der Dämpferhärtegrad dementsprechend eingestellt werden kann.

Aus der EP 1 536 957 A2 ist ein Verfahren zum Ausgleich von Wankbewegungen eines Kraftfahrzeugs bekannt, bei welchem eine Neigung des Kraftfahrzeugs zu einer Wankbewegung mittels einer Messung von mindestens einer Drehung des Kraftfahrzeugs um eine Hochachse ermittelt wird und daraufhin ein Dämpferhärtegrad in Abhängigkeit von einer Fahrsituation im Bereich des Unter- oder Übersteuerns entsprechend eingestellt wird. Aus der DE 10 2014 217 307 A1 ist eine Steuervorrichtung bekannt, welche dazu eingerichtet ist, auf Basis eines Reifenbelastungsfaktors der Reifen eines Kraftfahrzeugs eine Belastung an den jeweiligen Reifen anhand der am Kraftfahrzeug gemessenen Querkräften in einer Fahrsituation zu ermitteln und jeweils die in der Fahrsituation an einem Reifen auftretende Belastung an den Reifen mit einem höheren Reifenbelastungsfaktor zu verteilen.

Der Erfindung liegt die Aufgabe zugrunde, ein Steuerverhalten eines semi-aktiven Fahrwerks an die in dem Fahrwerk verbauten Reifen anzupassen.

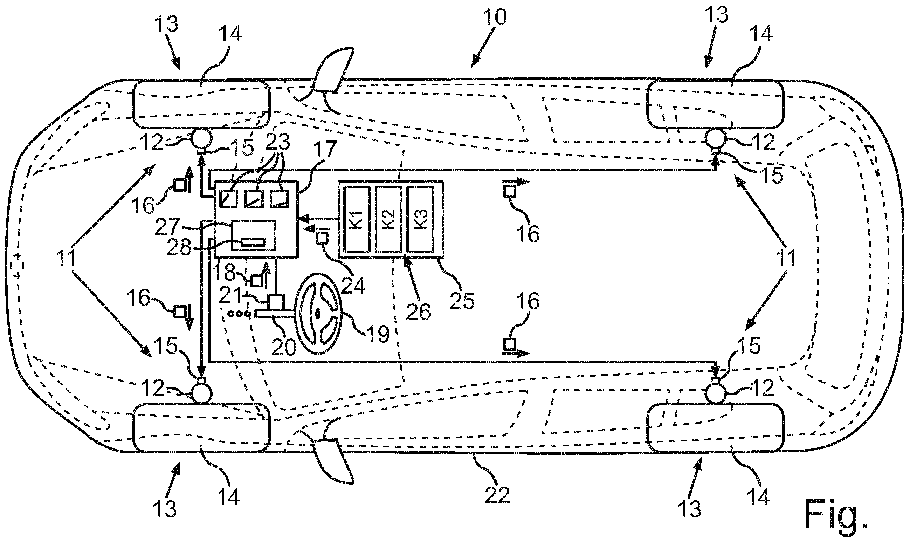

Die Aufgabe wird durch die Gegenstände der unabhängigen Patentansprüche gelöst. Vorteilhafte weitere Bildungen der Erfindung sind durch die abhängigen Patentansprüche, die folgende Beschreibung sowie die Figur beschrieben.

Durch die Erfindung ist ein Verfahren zum Betreiben einer Steuervorrichtung für ein Fahrwerk eines Kraftfahrzeugs bereitgestellt. Die Steuervorrichtung empfängt ein Situationssignal, welches eine vorbestimmte, aktuelle und/oder geplante (zukünftige) fahrdynamische Situation signalisiert. Als fahrdynamische Situation wird eine Kurvenfahrt (d.h. ein Lenkvorgang) signalisiert. In einer Ausführungsform wird zusätzlich eine Vertikalbeschleunigung des Kraftfahrzeugs signalisiert. In Abhängigkeit von dem Situationssignal wird für zumindest einen Schwingungsdämpfer des Fahrwerks ein jeweiliges Stellsignal zum Einstellen der Dämpferhärte erzeugt. Eine andere Bezeichnung für Schwingungsdämpfer ist auch Federbein oder Stoßdämpfer. Das Stellsignal wird an eine Stelleinheit des jeweiligen Schwingungsdämpfers ausgesendet. Bevorzugt wird mittels des Stellsignals eine Stellung eines Stellventils des jeweiligen Schwingungsdämpfers eingestellt. Mittels des Stellventils kann zum Beispiel ein durchströmbarer Querschnitt für ein Fluid des Schwingungsdämpfers eingestellt und hierdurch eine Änderungsrate, mit welcher zum Beispiel ein Kolben in einem Zylinder bewegt werden kann, festgelegt werden. Bei einem magnetorheologischen Stoßdämpfer kann die Stelleinheit eine Feldstärke eines Magnetfelds einstellen. Insbesondere bei den beiden beschriebenen fahrdynamischen Situationen (Lenkvorgang/Kurvenfahrt und Vertikalbeschleunigung) wird hierdurch festgelegt, wie schnell ein Aufbau des Kraftfahrzeugs, der durch das Fahrwerk federnd bezüglich der Straße gelagert ist, seine Relativposition zur Straßenoberfläche ändert. Insbesondere bei einer Kurvenfahrt wird das Wankverhalten des Aufbaus hierdurch festgelegt.

Je härter der Schwingungsdämpfer eingestellt ist, d.h. je größer die Dämpferhärte ist, desto größer ist eine Änderungsrate der am Reifen wirkenden Kraft. Deshalb wird zum Erzeugen des jeweiligen Stellsignals zumindest ein Konfigurationswert zum Konfigurieren eines mittels der eingestellten Dämpferhärte bewirkten Kraftaufbaus zugrunde gelegt. Der Kraftaufbau beschreibt den zeitlichen Verlauf der durch den Schwingungsdämpfer erzeugten Kraft. Durch Berücksichtigen zumindest eines Konfigurationswerts kann hierbei der Kraftaufbau an den Reifen angepasst werden. Mehrere Kennwerte können dabei zum Beispiel in Form einer Kennlinie oder eines Kennfelds bereitgestellt werden. Der zumindest eine Konfigurationswert ist gemäß dem Stand der Technik konstant, d.h. auf einen festen Wert eingestellt, der in der besagten Weise zum Beispiel auf Sommerreifen abgestimmt sein kann.

Um nun bei einem Reifenwechsel zum Beispiel auf einen Winterreifen keine Verluste bei der Performanz oder Dynamik zu erhalten, ist erfindungsgemäß vorgesehen, dass der Reifenwechsel durch ein Klassensignal signalisiert wird. Das Klassensignal gibt eine jeweilige Reifenklasse eines durch den jeweiligen Schwingungsdämpfer gehaltenen Reifens an. Anders als im Stand der Technik wird also nicht der Reifen im Detail zum Beispiel durch eine Kennlinie beschrieben, sondern es werden unterschiedliche Reifentypen in Klassen oder Raster zusammengefasst. eine Reifenklasse kann also mehrere Reifentypen oder Reifenprodukte umfassen. Das Klassensignal wird durch die Steuervorrichtung empfangen. Der besagte zumindest eine Konfigurationswert für das Stellsignal des Schwingungsdämpfers, durch welchen der Kraftaufbau festgelegt wird, wird durch die Steuervorrichtung in Abhängigkeit von dem Klassensignal des Reifens eingestellt. Man vermeidet also Konfigurationswerte, einen spezifischen Reifentyp beschreiben. Stattdessen erfolgt eine gestufte Anpassung des Konfigurationswerts in Abhängigkeit von der ermittelten Reifenklasse. Hierdurch wird vermieden, dass für eine Vielzahl unterschiedlicher Reifentypen jeweils Konfigurationswerte definiert sein müssen und dann beim Schätzen oder Ermitteln des Reifentyps aufgrund von Schätzfehlern die falsche Kennlinie ausgewählt wird. Bevorzugt ist vorgesehen, dass nur zwei oder drei oder vier oder fünf oder sechs unterschiedliche Reifenklassen vorgesehen sind. Dies führt beim Schätzen der Reifenklasse zu robusten oder zuverlässigen Schätzergebnissen.

Durch die Erfindung ergibt sich der Vorteil, dass bei einem semi-aktiven Fahrwerk beim Verbau von Winterreifen oder Ganzjahresreifen eine Beeinträchtigung der Querdynamik geringer ausfällt als bei einer Steuervorrichtung, die lediglich auf Sommerreifen abgestimmt ist.

In Abhängigkeit von dem Situationssignal wird durch die Steuervorrichtung ermittelt, welche Dämpferhärte der jeweilige Schwingungsdämpfer benötigt, um ein vorgegebenes Wankverhalten einzustellen, und hierbei wird auch berücksichtigt, welche Eigenschaften die Reifen des Kraftfahrzeugs jeweils aufweisen, indem eine Härte der Reifen als eine Kraft-Kennlinie, welche den Seitenkraftaufbau beschreibt, berücksichtigt wird, indem durch die Steuervorrichtung zu jedem Schwingungsdämpfer das Klassensignal, welches eine jeweilige Reifenklasse eines durch den jeweiligen Schwingungsdämpfer gehaltenen Reifens angibt, empfangen wird und für jede Reifenklasse eine Kennlinie in der Steuervorrichtung vorgesehen ist und bei der Steuervorrichtung in Abhängigkeit von dem Klassensignal festgelegt wird, welche Kennlinie aktuell zugrunde gelegt wird.

Zu der Erfindung gehören auch vorteilhafte Weiterbildungen, durch deren Merkmale sich zusätzliche Vorteile ergeben.

Mittels des zumindest einen Konfigurationswerts kann zum Beispiel ein Betrag der vom Schwingungsdämpfer erzeugten Kraft festgelegt sein. Bevorzugt ist vorgesehen, dass der zumindest eine Konfigurationswert einen Zeitverlauf eines mittels des Stellsignals bewirkten Querkraftaufbaus festlegt. Der Querkraftaufbau ist die Änderung der vom Reifen während einer Kurvenfahrt oder bei einer seitlichen Windböe erzeugte Seitenführungskraft oder Querkraft. Je schneller die Dämpferhärte vergrößert wird, desto schneller ist auch der Querkraftaufbau. Durch Festlegen des zeitlichen Verlaufs der Dämpferhärte wird also entsprechend auch der zeitliche Verlauf des Querkraftaufbaus eingestellt. Indem der Schwingungsdämpfer zunächst mit einem geringen ersten Dämpferhärte betrieben wird, wird der Querkraftaufbau verzögert, da das Kraftfahrzeug zunächst eine Wankbewegung ausführt, als in dem Fall, in welchem in derselben Zeit eine größere zweite Dämpferhärte eingestellt wird, sodass anstelle einer Wankbewegung eine Querkraft auf den Reifen übertragen wird.

Das Klassensignal kann in einem einfachen Fall signalisieren, dass die Reifenklasse ein Sommerreifen oder eine von einem Sommerreifen verschiedene Reifenklasse ist. Mit anderen Worten werden in diesem Fall nur zwei Reifenklassen zugrunde gelegt. In der besagten Weise können aber auch mehr als zwei Reifenklassen vorgesehen sein, die z.B. Winterreifen und/oder Ganzjahresreifen umfassen können.

Zum Ermitteln des Klassensignals kann vorgesehen sein, dass eine Bedieneinrichtung in dem Kraftfahrzeug bereitgestellt wird und das Klassensignal aus der Bedieneinrichtung empfangen wird, an welcher die Reifenklasse als Nutzereingabe empfangen wird. Indem nur Reifenklassen und kein spezifischer Reifentyp vorgesehen sind, ist die Bedienung auch besonders einfach.

Ein Klassensignal kann auch zum Beispiel aus einem RFID-Signalgeber (RFID - Radio Frequency Identification) des Reifens empfangen werden. Ein solcher RFID-Signalgeber kann beispielsweise Bestandteil eines TPMS (Tire Pressure Monitoring System - Reifendrucküberwachungssystem) des Reifens sein. Hierdurch kann die Erfassung der Reifenklasse automatisiert, d.h. ohne ein Zutun eines Nutzers, erfolgen.

Zusätzlich oder alternativ dazu kann das Klassensignal für zumindest einen Reifen aus einer Schätzeinrichtung zum Schätzen der Reifenklasse empfangen werden. Die Schätzeinrichtung umfasst hierbei eine Beobachterfunktion, welche einen Schätzwert einer fahrdynamischen Größe, insbesondere einer Querbeschleunigung, ermittelt und mit einem Messwert dieser fahrdynamischen Größe vergleicht. Eine solche Beobachterfunktion kann beispielsweise durch einen Luenberger-Beobachter oder ein Kalman-Filter oder ein künstliches neuronales Netzwerk bereitgestellt werden. Eine Beobachterfunktion ermittelt in Abhängigkeit von zum Beispiel einem Lenksignal einen Schätzwert für die fahrdynamische Größe, zum Beispiel die Querbeschleunigung, und legt hierbei ein Modell für ein fahrdynamisches Verhalten des Kraftfahrzeugs zugrunde. Falls der dann gemessene Wert für die fahrdynamische Größe, also zum Beispiel die Querbeschleunigung, von dem Schätzwert abweicht, so ist hieran erkennbar, dass ein Parameter des Modells nicht die tatsächlichen physikalischen Verhältnisse im Kraftfahrzeug beschreibt. In Abhängigkeit von dem Unterschied zwischen dem Schätzwert und dem Messwert wird dann entsprechend die Reifenklasse ermittelt, also der Modellparameter für den Reifen angepasst. Ein solches Modell wird insbesondere in Form des so genannten Einspurmodells bereitgestellt, mittels welchem das fahrdynamische Verhalten eines Kraftfahrzeugs im Zusammenhang mit der Erfindung ausreichend genau beschrieben werden kann. Der Schätzwert wird also mittels des Einspurmodells ermittelt, welches zumindest einen von der Reifenklasse abhängigen Modellparameter aufweist. Durch Ändern der im Einspurmodell zugrunde gelegten Reifenklasse wird also das Einspurmodell angepasst, sodass sich ein anderer Schätzwert ergibt. Durch vergleichen des dann resultierenden Schätzwerts mit dem Messwert kann überprüft werden, ob die richtige Reifenklasse geschätzt wurde.

Wie bereits ausgeführt, gehört zu der Erfindung auch das Kraftfahrzeug mit der Steuervorrichtung zum Steuern des zumindest einen Schwingungsdämpfers des Kraftfahrzeugs. Die Steuervorrichtung weist eine Prozessoreinrichtung auf, die dazu eingerichtet ist, eine Ausführungsform des erfindungsgemäßen Verfahrens durchzuführen. Die Prozessoreinrichtung kann hierzu zumindest einen Mikroprozessor und/oder zumindest einen Mikrocontroller aufweisen. Des Weiteren kann die Prozessoreinrichtung einen Programmcode aufweisen, der dazu eingerichtet ist, bei Ausführen durch die Prozessoreinrichtung eine Ausführungsform des erfindungsgemäßen Verfahrens durchzuführen. Der Programmcode kann zum Beispiel in einem Datenspeicher der Prozessoreinrichtung gespeichert sein.

Im Folgenden ist ein Ausführungsbeispiel der Erfindung anhand der einzigen Figur (Fig.) beschrieben.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

Die Figur zeigt ein Kraftfahrzeug 10, bei dem es sich zum Beispiel um einen Kraftwagen, insbesondere einen Personenkraftwagen, handeln kann. Das Kraftfahrzeug 10 weist ein Fahrwerk 11 auf, bei welchem durch Federbeine oder Schwingungsdämpfer 12 jeweils ein Rad 13 mit einem Reifen 14 federnd gelagert oder gehalten wird. Jeder Schwingungsdämpfer 12 weist eine Stelleinheit 15 auf, die zum Beispiel ein Stellventil umfassen kann. Durch jede Stelleinheit 15 wird in Abhängigkeit von einem jeweiligen Stellsignal 16 eine Dämpferkraft oder Dämpferhärte eingestellt. Hierdurch ergeben sich eine Einfedergeschwindigkeit und/oder ein Einfederweg bei einem fahrdynamischen Vorgang, zum Beispiel einer Kurvenfahrt mit einer gegebenen Geschwindigkeit.

Jedes Stellsignal 16 wird durch eine Steuervorrichtung 17 des Kraftfahrzeugs 1 erzeugt. Jedes Stellsignal 16 wird dabei in Abhängigkeit von einem Situationssignal 18 eingestellt.

Ein Beispiel für ein Situationssignal 18 ist ein Lenksignal, welches zum Beispiel einen Lenkwinkel eines Lenkrads 19 angibt, wie es zum Beispiel an einer Lenkstange 20 des Lenkrads 19 von einem Lenkwinkelsensor 21 erzeugt oder erfasst werden kann. Durch das Lenksignal ist somit eine Kurvenfahrt des Kraftfahrzeugs beschrieben. Ein anderes Beispiel für ein Situationssignal ist ein Betätigungssignal einer Bremse oder ein Beschleunigungssignal eines Beschleunigungssensors (nicht dargestellt), welcher eine Vertikalbeschleunigung und/oder Querbeschleunigung eines Aufbaus 22 des Kraftfahrzeugs 10 beschreibt.

Ein weiteres Beispiel für ein Situationssignal 18 ist ein Lenkmanöversignal, wie es zum Beispiel durch ein Fahrerassistenzsystem für ein geplantes Fahrmanöver erzeugt werden kann, wie es zum Beispiel bei einem automatisierten Ausweichmanöver vorgesehen sein kann. Handelt es sich bei dem Fahrmanöver um eine Kurvenfahrt, so ist entsprechend als geplante fahrdynamische Situation eine geplante Kurvenfahrt signalisiert.

In Abhängigkeit von dem Situationssignal 18 wird durch die Steuervorrichtung 17 ermittelt, welche Dämpferhärte der Schwingungsdämpfer 12 benötigt ist, um ein vorgegebenes Wankverhalten, zum Beispiel einen vorgegebenen maximalen Wankwinkel einzustellen. Hierbei wird auch berücksichtigt, welche Eigenschaften die Reifen 14 aufweisen. Hierbei wird eine Härte der Reifen in Form einer Kraft-Kennlinie berücksichtigt, welche den Seitenkraftaufbau beschreibt und hierzu zum Beispiel einen Zusammenhang zwischen Radkraft (vertikale Belastung des Reifens) und Seitenkraft beschreibt. Die Eigenschaft des Reifens 14 hängt dabei insbesondere davon ab, ob es sich z.B. um einen Sommerreifen, einen Winterreifen oder einen Ganzjahresreifen handelt. Entsprechend wird für jede dieser Reifenklassen eine Kennlinie 23 in der Steuervorrichtung 17 vorgesehen. Die Kennlinien 23 repräsentieren jeweils mehrere Kennwerte zum Konfigurieren eines mittels der eingestellten Dämpferhärte bewirkten Kraftaufbaus, insbesondere einer Querkraft.

Welche Kennlinie 23 aktuell zugrunde gelegt wird, wird bei der Steuervorrichtung 17 in Abhängigkeit von einem Klassensignal 24 festgelegt. Das Klassensignal 24 kann zum Beispiel aus einer Bedieneinrichtung 25 empfangen werden, an welcher ein Benutzer des Kraftfahrzeugs 10 eine jeweilige Reifenklasse K1, K2, K3 der Reifen 14 zum Beispiel in einem Bedienmenü 26 auswählen kann. Die Bedieneinrichtung 25 kann zum Beispiel ein Infotainmentsystem (Information-Unterhaltungssystem) des Kraftfahrzeugs 10 sein.

Alternativ dazu oder zusätzlich kann vorgesehen sein, dass die Reifenklasse selbstlernend mittels einer Beobachterfunktion 27 innerhalb der Steuervorrichtung 17 oder (nicht dargestellt) in einer anderen Steuervorrichtung erkannt oder eingestellt wird. Hierzu kann die Beobachterfunktion 27 ein digitales fahrdynamisches Modell, insbesondere ein Einspurmodell 28, in der beschriebenen Weise nutzen. So kann erkannt werden, dass zum Beispiel keine Sommerreifen verbaut sind, sondern Winterreifen oder Ganzjahresreifen oder Performance-Sommerreifen (zum Beispiel Semislicks). Über diese Einstellung kann ein Regler der Steuervorrichtung 17 konfiguriert werden und daraufhin ein Kraftaufbau an den Schwingungsdämpfern 12 insbesondere bei Querdynamikvorgängen konfiguriert werden.

So erfolgt der Kraftaufbau an den Schwingungsdämpfern 12 unter Berücksichtigung des eingebauten oder bereitgestellten Reifens 14.

Hierdurch wird die Möglichkeit gegeben, bei dem semi-aktiven Fahrwerk 11 nicht nur für eine spezifische, fest vorgegebene Reifenklasse, zum Beispiel Sommerreifen, das Stellsignal zu erzeugen, sondern auch einen Winterreifenmodus oder einen Modus für Ganzjahresreifen oder Performance-Reifen, auszuwählen, der innerhalb der Dämpferregelung auf den unterschiedlichen Kraftaufbau in den Reifen der unterschiedlichen Reifenklassen reagiert. So kann die Gesamtperformance der Dämpferregelung auch beim Verbau von anderen Reifenklassen optimiert oder angepasst erfolgen. Durch die Anpassung ergibt sich jeweils zum Beispiel ein geringeres Wankverhalten als für den Fall, dass die Reifenklasse Sommerreifen zugrunde gelegt wird, wenn Winterreifen oder eine andere Reifenklasse verwendet wird.

Insgesamt zeigt das Beispiel, wie durch die Erfindung eine Anpassung der Querdynamikregelung eines semi-aktiven Fahrwerks in Abhängigkeit von der Reifenklasse bereitgestellt werden kann.

## Patentansprüche

1. Verfahren zum Betreiben einer Steuervorrichtung (17) für ein Fahrwerk (11) eines Kraftfahrzeugs (10), mit Bereitstellung des Kraftfahrzeugs, des Fahrwerks sowie einer Mehrzahl von Schwingungsdämpfern und Reifen, wobei bei dem Fahrwerk (11) durch Schwingungsdämpfer (12) jeweils ein Rad (13) mit einem Reifen (14) federnd gelagert oder gehalten ist, wobei
- ein Situationssignal (18), welches eine vorbestimmte, aktuelle und/oder geplante fahrdynamische Situation signalisiert, empfangen wird und
- in Abhängigkeit von dem Situationssignal (18) ein jeweiliges Stellsignal (16) zum Einstellen einer Dämpferhärte zumindest eines Schwingungsdämpfers (12) des Fahrwerks (11) erzeugt und an eine Stelleinheit (15) des jeweiligen Schwingungsdämpfers (12) ausgesendet wird, wobei
- zum Erzeugen des jeweiligen Stellsignals (16) zumindest ein Konfigurationswert zum Konfigurieren eines mittels der eingestellten Dämpferhärte bewirkten Kraftaufbaus zugrunde gelegt und
- durch das Situationssignal (18) als fahrdynamische Situation eine Kurvenfahrt signalisiert wird, **dadurch gekennzeichnet, dass**
- in Abhängigkeit von dem Situationssignal (18) durch die Steuervorrichtung (17) ermittelt wird, welche Dämpferhärte der jeweilige Schwingungsdämpfer (12) benötigt, um ein vorgegebenes Wankverhalten einzustellen, wobei auch berücksichtigt wird, welche Eigenschaften die Reifen (14) des Kraftfahrzeugs (10) jeweils aufweisen, indem eine Härte der Reifen (14) als eine Kraft-Kennlinie, welche den Seitenkraftaufbau beschreibt, berücksichtigt wird, indem
- durch die Steuervorrichtung (17) zu jedem Schwingungsdämpfer (12) ein Klassensignal (24), welches eine jeweilige Reifenklasse eines durch den jeweiligen Schwingungsdämpfer (12) gehaltenen Reifens (14) angibt, empfangen wird und für jede Reifenklasse eine Kennlinie (23) in der Steuervorrichtung (17) vorgesehen ist und bei der Steuervorrichtung (17) in Abhängigkeit von dem Klassensignal (24) festgelegt wird, welche Kennlinie (23) aktuell zugrunde gelegt wird, und damit insgesamt
- der zumindest eine Konfigurationswert für das Stellsignal (16) des Schwingungsdämpfers (12) in Abhängigkeit von dem Klassensignal (24) des Reifens (14) eingestellt wird.

2. Verfahren nach Anspruch 1, wobei nur zwei oder drei oder vier oder fünf oder sechs unterschiedliche Reifenklassen vorgesehen sind.

3. Verfahren nach einem der vorhergehenden Ansprüche, wobei durch das Situationssignal (18) als fahrdynamische Situation eine Vertikalbeschleunigung signalisiert wird.

4. Verfahren nach einem der vorhergehenden Ansprüche, wobei mittels des jeweiligen Stellsignals (16) eine Stellung eines jeweiligen Stellventils des zumindest einen Schwingungsdämpfers (12) eingestellt wird.

5. Verfahren nach einem der vorhergehenden Ansprüche, wobei der zumindest eine Konfigurationswert einen Zeitparameter zum Festlegen eines zeitlichen Verlaufs eines mittels des Stellsignals (16) bewirkten Querkraftaufbaus.

6. Verfahren nach einem der vorhergehenden Ansprüche, wobei durch das Klassensignal (24) signalisiert wird, dass die Reifenklasse ein Sommerreifen oder von einem Sommerreifen verschiedenen Reifenklasse ist.

7. Verfahren nach einem der vorhergehenden Ansprüche, wobei das Klassensignal (24) für zumindest einen Reifen (14) aus einer Bedieneinrichtung (25), an welcher eine die Reifenklasse betreffenden Nutzereingabe empfangen wird, und/oder aus einem RFID-Signalgeber des Reifens (14) empfangen wird.

8. Verfahren nach einem der vorhergehenden Ansprüche, wobei das Klassensignal (24) für zumindest einen Reifen (14) aus einer Schätzeinrichtung zum Schätzen der Reifenklasse empfangen wird und die Schätzeinrichtung eine Beobachterfunktion (27) umfasst, welche einen Schätzwert einer fahrdynamischen Größe ermittelt und mit einem Messwert der fahrdynamischen Größe vergleicht und in Abhängigkeit von einer Unterschied zwischen dem Schätzwert und dem Messwert die Reifenklasse ermittelt.

9. Verfahren nach Anspruch 8, wobei als der Schätzwert der fahrdynamischen Größe ein Schätzwert einer Querbeschleunigung ermittelt wird.

10. Verfahren nach Anspruch 8 oder 9, wobei der Schätzwert mittels eines Einspurmodell (28) ermittelt wird, welches zumindest einen von der Reifenklasse abhängigen Modellparameter aufweist.

11. Kraftfahrzeug (10) umfassend ein Fahrwerk (11) ), wobei bei dem Fahrwerk (11) durch Schwingungsdämpfer (12) jeweils ein Rad (13) mit einem Reifen (14) federnd gelagert oder gehalten ist, und eine Steuervorrichtung (17) zum Steuern von zumindest einem Schwingungsdämpfer (12) des Kraftfahrzeugs (10), wobei das Kraftfahrzeug (10) einen Lenkwinkelsensor (21) und/oder einen eine Vertikal- und/oder Querbeschleunigung eines Aufbaus des Kraftfahrzeugs beschreibenden Beschleunigungssensor und/oder ein Fahrerassistenzsystem zum Erzeugen oder Erfassen des Situationssignals (18) umfasst, und die Steuervorrichtung (17) eine Prozessoreinrichtung aufweist, die dazu eingerichtet ist, ein Verfahren nach einem der vorhergehenden Ansprüche durchzuführen.

## Claims

1. Method for operating a control device (17) for a chassis (11) of a motor vehicle (10), including providing the motor vehicle, the chassis and a plurality of vibration dampers and tyres, wherein a wheel (13) with a tyre (14) is spring-mounted or held in each case in the chassis (11) by vibration dampers (12), wherein
- a situation signal (18), which signals a predetermined, current and/or planned dynamic driving situation, is received and
- in dependence on the situation signal (18), a respective actuation signal (16) for setting a damper hardness of at least one vibration damper (12) of the chassis (11) is generated and transmitted to an actuation unit (15) of the respective vibration damper (12), wherein
- at least one configuration value for configuring a buildup of force brought about by means of the set damper hardness is used as a basis for generating the respective actuation signal (16) and
- cornering is signalled as a dynamic driving situation by the situation signal (18), **characterized in that**
- in dependence on the situation signal (18), it is determined by the control device (17) which damper hardness of the respective vibration dampers (12) is required in order to set a prescribed roll behaviour, it also being taken into account which properties the tyres (14) of the motor vehicle (10) have in each case, **in that** a hardness of the tyres (14) is taken into account as a force characteristic that describes the side-force buildup, **in that**
- a class signal (24), which specifies a respective tyre class of a tyre (14) held by the respective vibration damper (12) is received by the control device (17) for each vibration damper (12), and for each tyre class a characteristic (23) is provided in the control device (17) and, in dependence on the class signal (24), it is established in the control device (17) which characteristic (23) is currently being used as a basis, and consequently overall
- the at least one configuration value for the actuation signal (16) of the vibration damper (12) is set in dependence on the class signal (24) of the tyre (14).

2. Method according to Claim 1, wherein only two or three or four or five or six different tyre classes are provided.

3. Method according to one of the preceding claims, wherein a vertical acceleration is signalled as a dynamic driving situation by the situation signal (18) .

4. Method according to one of the preceding claims, wherein a setting of a respective actuation valve of the at least one vibration damper (12) is set by means of the respective actuation signal (16).

5. Method according to one of the preceding claims, wherein the at least one configuration value is a time parameter for establishing a variation over time of a lateral-force buildup brought about by means of the actuation signal (16).

6. Method according to one of the preceding claims, wherein it is signalled by the class signal (24) that the tyre class is a summer tyre or a tyre class different from a summer tyre.

7. Method according to one of the preceding claims, wherein the class signal (24) for at least one tyre (14) is received from an operator control device (25), at which a user input concerning the tyre class is received, and/or from an RFID signal transmitter of the tyre (14).

8. Method according to one of the preceding claims, wherein the class signal (24) for at least one tyre (14) is received from an estimating device for estimating the tyre class and the estimating device comprises an observer function (27), which determines an estimated value of a dynamic driving variable and compares it with a measured value of the dynamic driving variable and determines the tyre class in dependence on a difference between the estimated value and the measured value.

9. Method according to Claim 8, wherein an estimated value of a lateral acceleration is determined as the estimated value of the dynamic driving variable.

10. Method according to Claim 8 or 9, wherein the estimated value is determined by means of a single-track model (28), which has at least one model parameter dependent on the tyre class.

11. Motor vehicle (10) comprising a chassis (11), wherein a wheel (13) with a tyre (14) is spring-mounted or held in each case in the chassis (11) by vibration dampers (12), and a control device (17) for controlling at least one vibration damper (12) of the motor vehicle (10), wherein the motor vehicle (10) comprises a steering angle sensor (21) and/or an acceleration sensor, describing a vertical and/or transverse acceleration of a body of the motor vehicle, and/or a driver assistance system for generating or detecting the situation signal (18), and the control device (17) has a processor device, which is designed to carry out a method according to one of the preceding claims.

## Revendications

1. Procédé de fonctionnement d'un dispositif de commande (17) destiné à un mécanisme de roulement (11) d'un véhicule automobile (10), avec disposition du véhicule automobile, du mécanisme de roulement et d'une pluralité d'amortisseurs de vibrations et de pneumatiques, une roue (13) munie d'un pneumatique (14) étant montée ou maintenue élastiquement par des amortisseurs de vibrations (12) dans le mécanisme de roulement (11),
- un signal de situation (18) étant reçu qui signale une situation de roulement dynamique prédéterminée, actuelle et/ou planifiée, et
- en fonction du signal de situation (18), un signal de réglage respectif (16) étant généré, et envoyé à une unité de réglage (15) de l'amortisseur de vibrations respectif (12), pour régler une dureté d'amortisseur d'au moins un amortisseur de vibrations (12) du mécanisme de roulement (11),
- au moins une valeur de configuration destinée à configurer une formation de force due à la dureté d'amortisseur réglée étant prise comme base pour générer le signal de réglage respectif (16), et
- un virage étant signalé comme situation de roulement dynamique par le signal de situation (18), **caractérisé en ce que**
- le dispositif de commande (17) détermine en fonction du signal de situation (18) la dureté d'amortisseur requise par l'amortisseur de vibrations respectif (12) pour régler un comportement de roulis spécifié, des propriétés des pneumatiques (14) du véhicule automobile (10) étant également prises en compte à chaque fois, **en ce qu'**une dureté des pneumatiques (14) est prise en compte comme courbe caractéristique de force qui décrit la formation de force latérale, du fait que
- un signal de classe (24), qui indique une classe de pneumatique respective d'un pneumatique (14) maintenu par l'amortisseur de vibrations respectif (12), est reçu par le dispositif de commande (17) pour chaque amortisseur de vibrations (12), et une courbe caractéristique (23) est prévue dans le dispositif de commande (17) pour chaque classe de pneumatique et une détermination de la courbe caractéristique (23) qui est actuellement utilisée comme base est effectuée en fonction du signal de classe (24) dans le dispositif de commande (17), et donc dans l'ensemble
- l'au moins une valeur de configuration du signal de réglage (16) de l'amortisseur de vibrations (12) est réglée en fonction du signal de classe (24) du pneumatique (14).

2. Procédé selon la revendication 1, uniquement deux ou trois ou quatre ou cinq ou six classes de pneumatique différentes étant prévues.

3. Procédé selon l'une des revendications précédentes, une accélération verticale étant signalée par le signal de situation (18) comme situation de roulement dynamique.

4. Procédé selon l'une des revendications précédentes, une position d'une soupape de réglage respective de l'au moins un amortisseur de vibrations (12) étant réglée au moyen du signal de réglage respectif (16).

5. Procédé selon l'une des revendications précédentes, l'au moins une valeur de configuration étant un paramètre de temps destiné à définir une variation dans le temps d'une formation de force transversale provoquée au moyen du signal de réglage (16) .

6. Procédé selon l'une des revendications précédentes, le signal de classe (24) signalant que la classe de pneumatique est un pneumatique d'été ou une classe de pneumatique différente d'un pneumatique d'été.

7. Procédé selon l'une des revendications précédentes, le signal de classe (24) destiné à au moins un pneumatique (14) étant reçu d'un dispositif d'actionnement (25), au niveau duquel une donnée d'entrée utilisateur relative à la classe de pneumatique est reçue, et/ou d'un générateur de signal RFID du pneumatique (14).

8. Procédé selon l'une des revendications précédentes, le signal de classe (24) destiné à au moins un pneumatique (14) étant reçu d'un moyen d'estimation destiné à estimer la classe de pneumatique et le moyen d'estimation comprenant une fonction d'observation (27) qui détermine une valeur d'estimation d'une grandeur de roulement dynamique et la compare à une valeur de mesure de la grandeur de roulement dynamique et qui détermine la classe de pneumatique en fonction d'une différence entre la valeur d'estimation et la valeur de mesure.

9. Procédé selon la revendication 8, une valeur d'estimation d'une accélération transversale étant déterminée comme valeur d'estimation de la grandeur de roulement dynamique.

10. Procédé selon la revendication 8 ou 9, la valeur d'estimation étant déterminée à l'aide d'un modèle monovoie (28) qui comporte au moins un paramètre de modèle dépendant de la classe de pneumatique.

11. Véhicule automobile (10) comprenant un mécanisme de roulement (11), une roue (13) munie d'un pneumatique (14) étant à chaque fois montée ou maintenue élastiquement sur le mécanisme de roulement (11) par des amortisseurs de vibrations (12), et un dispositif de commande (17) pour commander au moins un amortisseur de vibrations (12) du véhicule à moteur (10), le véhicule automobile (10) comprenant un capteur d'angle de braquage (21) et/ou un capteur d'accélération décrivant une accélération verticale et/ou transversale d'une structure du véhicule automobile et/ou un système d'assistance à la conduite destiné à générer ou détecter le signal de situation (18), et le dispositif de commande (17) comportant un moyen formant processeur qui est conçu pour mettre en œuvre un procédé selon l'une des revendications précédentes.
